# EUROPEAN PATENT SPECIFICATION

(11) **EP 3 094 484 B1**
(45) Date of publication and mention of the grant of the patent: **27.06.2018**
(21) Application number: 15702100.7
(22) Date of filing: 20.01.2015
(51) Int. Cl.: B32B 5/24, A62B 1/20, B32B 5/30, B32B 27/14, B32B 27/26, B32B 27/42, B63B 7/08, B64D 25/14, B63B 27/14

(54) **BARRIER LAYER FOR INFLATABLE STRUCTURES**
BARRIERESCHICHTE FÜR AUFBLASBARE STRUKTUREN
GONFABLE STRUCTURES AVEC COUCHES BARRIÈRE

(30) Priority: 17.01.2014 US 201414158550
(43) Date of publication of application: 23.11.2016
(73) Proprietor: Goodrich Corporation, Charlotte, NC 28217-4578 (US)
(72) Inventor: MAZANY, Anthony M., Amelia Island, Florida 32034 (US)
(74) Representative: Dehns
(86) International application number: PCT/US2015/012027
(87) International publication number: WO 2015/109311

(56) References cited:
- WO-A2-2011/136478
- US-A1- 2003 224 877
- US-A1- 2008 220 282
- US-A1- 2011 046 289
- US-A1- 2011 223 405
- US-A1- 2012 315 407
- BYUNG MIN YOO ET AL: "Graphene and graphene oxide and their uses in barrier polymers", JOURNAL OF APPLIED POLYMER SCIENCE, vol. 131, no. 1, 5 January 2014 (2014-01-05), pages n/a-n/a, XP055178074, ISSN: 0021-8995, DOI: 10.1002/app.39628
- XIAN JIANG ET AL: "Exploring the potential of exfoliated graphene nanoplatelets as the conductive filler in polymeric nanocomposites for bipolar plates", JOURNAL OF POWER SOURCES, vol. 218, 1 November 2012 (2012-11-01), pages 297-306, XP055178077, ISSN: 0378-7753, DOI: 10.1016/j.jpowsour.2012.07.001

## Description

### BACKGROUND OF THE INVENTION

This invention relates to air-impermeable fabrics, and more particularly, to fabrics used for emergency evacuation equipment for aircraft evacuation such as evacuation slides and life rafts, as well as other inflatable structures such as for cushions and other emergency and non-emergency applications.

The requirement for reliably evacuating airline passengers in the event of an emergency is well known. Emergencies at take-off and landing often demand swift removal of the passengers from the aircraft because of the potential for injuries from fire, explosion, or sinking in water. A conventional method of quickly evacuating a large number of passengers from an aircraft is to provide multiple emergency exits, each of which is equipped with an inflatable evacuation slide, which often doubles as a life raft in the event of a water evacuation. These evacuation slides are most commonly constructed of an air-impervious coated fabric material that is formed into a plurality of tubular members. When inflated, these tubular members form a self-supporting structure with a slide surface capable of supporting the passengers being evacuated. In addition to being air-impervious, the fabric material from which the tubular members are constructed must meet FAA specification requirements of TSO-C69c for resistance to radiant heat, flammability, contaminants, fungus and other requirements.

Although evacuation slides permit passengers to quickly and safely descend from the level of the aircraft exit door to the ground, the requirement that each aircraft exit door be equipped with an inflatable evacuation slide means that substantial payload capacity must be devoted to account for the weight of multiple evacuation slides. Accordingly, there has long existed the desire in the industry to make the inflatable evacuation slides as light as possible. A significant portion of the weight of an emergency evacuation slide is the weight of the slide fabric itself. Accordingly, various attempts have been made to reduce the weight of the slide fabric. One accepted method has been to reduce the physical size of the structural members of the slide by increasing the inflation pressure. Increased inflation pressure, however, causes greater stress on the slide fabric and, therefore, the benefit of the reduced physical size is at least partially cancelled out by the need to use a heavier gauge of slide fabric in order to withstand higher inflation pressures. Current state of the art slide fabric consists of a 72 x 72 yarns per inch nylon cloth made of ultra-high-tenacity nylon fibers. This 72 x 72 fabric by itself has a grab tensile strength of approximately 380 lbs in the warp direction and 320 lbs in the fill direction (as used herein grab tensile strength refers to the strength measured by grabbing a sample of fabric, typically 4 inches wide, between a set of one inch wide jaws and pulling to failure.) The fabric is typically coated with multiple layers of an elastomeric polymer to render it impermeable to air as well as a radiant-heat-resistant coating. This results in a strong, but heavy fabric, having a grab tensile strength of approximately 390 lbs in the warp direction and in the fill direction, but with an areal weight that can exceed 7.0 oz/yd². As can be determined from the foregoing, these coatings do not contribute significantly to the strength of the fabric.

Although the above-described fabrics for inflatable structures have achieved widespread use in the aviation industry, the disparate requirements for strength, weight, and flame resistance, as well as other requirements, have resulted in a continuing need in the art for new fabrics.

US 2012/0315407 describes a high-strength lightweight fabric for inflatable structures. US 2011/223405 describes a composite polymer film or layer with graphene-based nanosheets dispersed in the polymer for the reduction of gas permeability and light transmittance. US 2011/046289 describes tire or tire linings comprising a rubber composite, comprising at least one rubber or elastomer matrix and pristine nano graphene platelets dispersed in the matrix. J. Power Sources, 2012, 218, 297 explores the potential of using exfoliated graphene nanoplatelets as the conductive filler to construct conductive polymeric nanocomposites to substitute for conventional metallic and graphite biopolar plates in the polymer electrolyte membrane fuel cells.

### BRIEF DESCRIPTION OF THE INVENTION

As described in further detail below, the invention provides a new air-impermeable fabric. The air-impermeable fabric has a fabric substrate, which may also be referred to as a base fabric. Disposed over the fabric substrate is a barrier layer comprising a polymer binder and at least 20 weight percent (wt.%) graphene nanoplatelets, based on the total weight of the barrier layer. A barrier underlayer, which may or may not also include graphene nanoplatelets, can optionally be included between the fabric substrate and the barrier layer. A barrier overlayer, which may or may not also include graphene nanoplatelets, is disposed on the opposite side of the barrier layer from the barrier underlayer.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a cross-sectional view of an air-impermeable fabric as described herein;
FIG. 2 is a side view of an aircraft evacuation slide as described herein;
FIG. 3 is a bottom view of an aircraft evacuation slide as described herein; and
FIG. 4 is a graph plot of air permeation through fabrics as described herein.

### DETAILED DESCRIPTION OF THE INVENTION

As mentioned above, the invention is directed to an air-impermeable fabric. It should be noted that, as used herein, the term "impermeable" does not refer to absolute or permanent impermeability, but rather to a degree of permeability sufficiently low to meet the functional requirements needed for any particular inflatable application. The fabric substrate, or base fabric, can be formed from any type of fiber possessing desired physical properties and processability. Nylon fibers are often used, at least in part due to the strength and strength to weight ratio possessed by nylon fabrics. Various nylons, such as nylon-6,6 or nylon-6, can be used, as well as other known nylon polymers. Other polymer fibers can also be used, such as polyester, other aromatic and/or aliphatic polyamides, liquid crystal polymers, etc. Natural fibers such as silk can also be used. Fiber diameters can be selected to achieve desired properties such as fiber spacings in woven fabric. Yarn counts can range from 30x30 yarns per inch to 90x90 yarns per inch, or higher, and more particularly from 40x40 yarns per inch to 75x75 yarns per inch. The yarn count geometry can also be asymmetric (i.e. 40 x 60 yarns per inch) if needed.

The fiber strength of the base cloth can also be increased by incorporating nanoreinforcements into the polymeric matrix of the fiber itself. The nanoreinforcements can be carbon nanotubes, carbon nanofibers, graphene nanoplatelets, polymeric nanofibers, metallic nanotubes or nanofibers, metal oxide nanotubes, metal oxide nanofibers, metal oxide nanoparticles or metal oxide nanoplatelets or a combination thereof. The nanoreinforcements can be incorporated into the polymer matrix of the fiber during synthesis of the fiber matrix or processing of the matrix into fibers. For example, the nanoreinforcements can be combined with the neat polymer matrix prior to thermal processing into fibers. The nanoreinforcements can also be incorporated into the monomeric precursors used to synthesize the polymeric composition of the cloth fiber.

Graphene nanoplatelets are commercially available from sources such as XG Sciences, and can be prepared by mechanical and/or thermal exfoliation of graphite. Graphene nanoplatelets can be prepared in various sizes, and those used in the barrier layer described herein can have a thickness ranging from 2 nm to 50 nm, more particularly from 5 nm to 15 nm. The graphene nanoplatelets can have diameters ranging from 0.5 µm to 50 µm, more particularly from 5 µm to 25 µm (note that diameter on the hexagonal-shaped nanoplatelets is defined as the distance between opposite corners of the hexagon). As mentioned above, the barrier layer comprises at least 20 wt.% graphene nanoplatelets, based on the total weight of the barrier layer (i.e., the cured coating). In some exemplary embodiments, the barrier layer comprises at least 25 wt.% graphene nanoplatelets, and in some embodiments at least 30 wt.% graphene nanoplatelets. Upper limits of graphene nanoplatelet content in the barrier layer in some embodiments can range up to 90 wt.%, in some embodiments up to 60 wt.%, and in some embodiments up to 35 wt.%. In one exemplary embodiment, the barrier layer comprises about 30 wt.% of graphene nanoplatelets. The barrier underlayer and the barrier overlayer can optionally contain graphene nanoplatelets. When present in the barrier underlayer and/or the barrier overlayer, the content level graphene nanoplatelets can comprise a minimum of 0.5 wt.%, in some embodiments a minimum of 1 wt.%. When present in the barrier underlayer and/or the barrier overlayer, the content level of graphene nanoplatelets have a maximum 5 wt.%, in some embodiments a maximum of 4 wt.%, and in some embodiments a maximum of 3 wt.%. In one exemplary embodiment, the barrier underlayer and the barrier overlayer comprises about 2 wt.% graphene nanoplatelets. In another exemplary embodiment, the barrier underlayer and the barrier overlayer has no graphene nanoplatelets. All weight percentages are based on the total weight of the respective coating layer.

The resin used for the barrier layer as well as the barrier underlayer and the barrier overlayer can be chosen from various polymers. Polyurethane polymers and polyurethane-containing copolymers are often used, at least in part due their elasticity and durability. Well-known polyurethane chemistry allows for various aromatic and/or aliphatic polyisocyanates and polyols to be reacted together to provide desired coating characteristics, and such coating resins are readily commercially available. Other polymers can be readily copolymerized with polyurethanes, often through inclusion of hydroxy-terminated prepolymers (e.g., OH-terminated polyester or OH-terminated polycarbonate or polyether) in the polyisocyanate/polyol reaction mix. In some embodiments, a polymer resin other than polyurethane is used, e.g., polyester. Blends of one or more of polymer resins such as those described above can also be included in a coating composition.

The coating composition can also contain one or more crosslinkers. For example, urethane and polyester resins can include polyfunctional alcohols (e.g., trimethylolpropane) or poly-functional alcohol reactive compounds (e.g., melamine derivatives such as hexamethoxymethylol melamine or melamine resin) as crosslinking agents. Polyurethane resins can also include polyfunctional isocyanates (e.g., trifunctional isocyanurate compounds formed by diisocyanates such as methylenediphenyl diisocyanate (MDI) or isophorone diisocyanate (IPDI)) as crosslinkers. Polyesters can also include polyfunctional acids (e.g., tricarballylic acid) as crosslinkers. The amount of crosslinker can be adjusted by those skilled in the art to achieve desired properties. In addition to accelerating cure, added crosslinker tends to increase coating hardness and decrease elasticity. The coating composition may also contain one or more volatile liquids, including water and/or various polar or non-polar organic solvents. Such volatile liquids are vaporized before or during cure and do not form part of the cured or finished coating. Reactive diluents (i.e., organic compounds that function as a solvent during application of a polymer resin-containing coating composition, but have functional groups that react with the polymer during cure so that they form part of the cured coating.

The coating compositions applied to form the any of the coatings on the fabric described herein can include various additives ordinarily incorporated into coating compositions. Such additives can be mixed at a suitable time during the mixing of the components for forming the composition, and include fillers, reinforcing agents, antioxidants, heat stabilizers, biocides, plasticizers, lubricants, antistatic agents, colorants, surface effect additives, radiation light stabilizers (including ultraviolet (UV) light stabilizers), stabilizers, and flame retardants. Such additives can be used in various amounts, generally from 0.01 to 15 wt.%, based on the total weight of the coating composition

As mentioned above, in some embodiments, the barrier layer can include one or more flame retardants. Exemplary flame retardants include phosphorous-containing compounds such as organophosphates (e.g., tris(2-butoxy)ethylphosphate (TBEP), tris(2-propylphenyl)phosphate, organophosphonates (e.g., dimethylphosphonate), organophosphinates (e.g., aluminum diethylphosphinate), inorganic polyphosphates (e.g., ammonium polyphosphate)), organohalogen compounds (e.g., decabromodiphenyl ethane, decabromodiphenyl ether, and various brominated polymers or monomers), compounds with both halogen and phosphorous-containing groups (e.g., tris(2,3-dibromopropyl) phosphate), as well as other known flame retardants. Brominated flame retardants are often used in combination with a synergist such as oxides of antimony (e.g., SbO₃, Sb₂O₅) and other forms of antimony such as sodium antimonite. The amount of flame retardant can vary widely depending on the particular flame retardant or combination of flame retardants, with exemplary amounts ranging from 5 wt.% to 50 wt.%, more particularly from 10 wt.% to 25 wt.%.

Other coating layers can be present in addition the above-described barrier layer, barrier overlayer, and barrier underlayer. In some embodiments, a heat-resistant (HR) layer is also present, often on the side of the fabric that will be the outside of the inflatable structure. HR layers can comprise a high temperature polymer resin binder and aluminum pigment. HR layers can contain at least 10 wt.% aluminum pigment. An exemplary formulation contains between 0.1 wt.% and 10 wt.% microspheres. A further exemplary formulation contains between 1 wt.% and 5 wt.% microspheres. In addition to radiant heat reflecting properties provided by the aluminum pigment, a heat-resistant layer can also include heat-absorbing additives such as ceramic microspheres. HR layers can contain at least 0.11 wt.% microspheres. An exemplary formulation contains between 0.11 wt.% and 6.2 wt.% microspheres. A further exemplary formulation contains between 1.1 wt.% and 2.1 wt.% microspheres. All weight percentages are based on the total weight of the layer. Tie coat layers can also be present. Tie coats are utilized to provide greater adhesion to the substrate than might be provided by the various functional layers. For example, a polyurethane-polycarbonate copolymer resin can be used in a tie coat applied directly to the fabric surface where its relatively low modulus of elasticity provides good conformation of the resin to the cloth morphology while the relatively higher modulus of elasticity of a polyurethane polymer resin used as binder for a barrier layer, barrier underlayer, and/or barrier overlayer provides the necessary strength and flexibility to maintain overall coating integrity and air impermeability when subjected to deformation and stress during inflation.

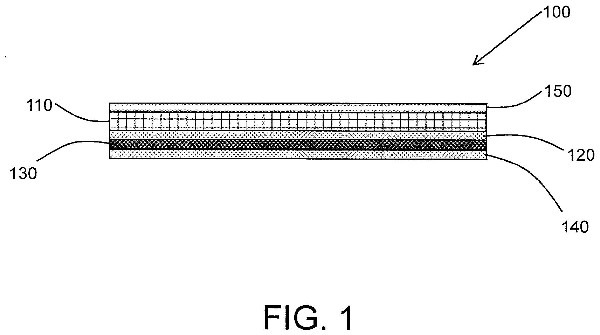

Turning now to the figures, FIG. 1 schematically depicts a cross-section view of an exemplary air-impermeable fabric 100 according to the invention. As shown in FIG. 1, fabric substrate 110 has barrier underlayer 120 disposed thereon. Barrier layer 130 comprising at least 20 wt.% graphene nanoplatelets is disposed over barrier underlayer 120. Barrier overlayer 140 is disposed over barrier layer 130. Barrier layer 130 along with barrier underlayer 120 and barrier overlayer 140 are disposed on one side of the fabric substrate 110 such as a side of the fabric that would be face the interior of an inflatable structure. On the other side of fabric substrate 110 is a heat-resistant layer 150 such as an aluminized coating. The above arrangement provides air retention (AR) layers on one side of the fabric that can face the interior of an inflatable structure and a heat-resistant layer 150 on the other side of the fabric that would be the exterior of an inflatable structure. This arrangement provides resistance to heat from external sources such as fire on the outside of an inflatable structure while keeping the critical AR layers further away from such external heat sources. Of course, other layer arrangements can be used as well. For example, the AR layers could be disposed between the base fabric and an outermost heat-resistant layer.

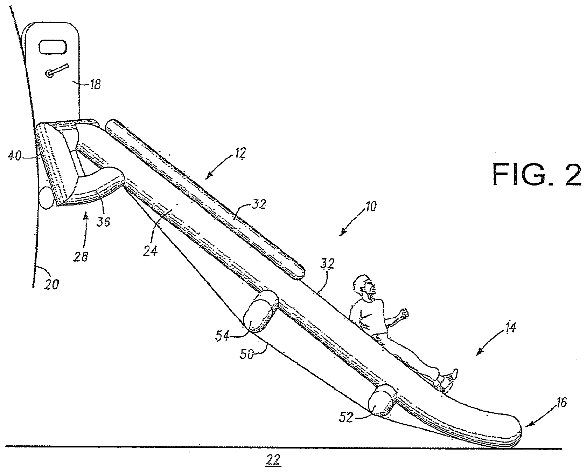

Turning now to FIG. 2, an inflatable evacuation slide assembly 10 is depicted incorporating features of the present invention. Evacuation slide assembly 10 generally comprises a head end 12, and a foot end 14 terminating at toe end 16. Head end 12 is configured to couple evacuation slide assembly 12 to an exit door 18 of an aircraft 20 while foot end 14 is in contact with the ground 22 such that the slide assembly 10 provides a sloping surface to permit the rapid egress of passengers from aircraft 20.

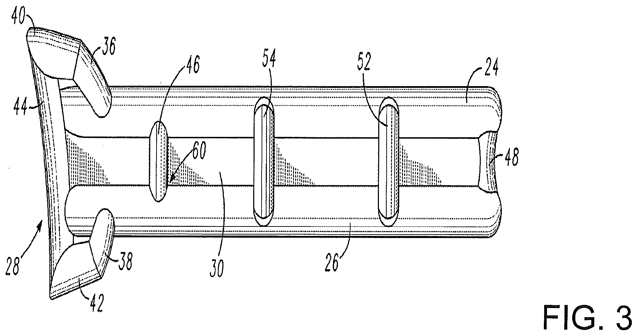

With reference to FIGS. 2 and 3, the main body of evacuation slide assembly 10 comprises a plurality of inflatable flexible members including side rail tubes 24, 26 which extend from head end truss assembly 28 to the ground 22. A slide surface 30 comprising a fabric membrane is stretched between side rail tubes 24 and 26 to provide a sliding surface for the disembarking passengers. A right hand rail 32 and a left hand rail (not shown) are positioned atop side rail tubes 24 and 26, respectively, to provide a hand hold for passengers descending evacuation slide assembly 10. Head end truss assembly 28 comprises a plurality of strut tubes 36, 38, upright tubes 40, 42 and a transverse tube 44 adapted to hold head end 12 of evacuation slide assembly 10 against the fuselage of aircraft 20 in an orientation to permit escape slide assembly 10 to unfurl in a controlled manner as it extends toward the ground.

The spaced apart configuration of side rail tubes 24 and 26 is maintained by a head end transverse tube 46, a toe end transverse tube 48, a foot end transverse truss 52 and medial transverse truss 54. The bending strength of escape slide assembly 10 is enhanced by means of one or more tension straps 50 stretched from toe end 16 over foot end transverse truss 52, medial transverse truss 54 and attached proximal head end 12 of evacuation slide assembly 10. As described, evacuation slide assembly 10 provides a lightweight structure that consumes a minimum amount of inflation gas while providing the necessary structural rigidity to permit passengers to safely evacuate an aircraft under emergency conditions.

The entire inflatable evacuation slide assembly 10 can be fabricated from an air impervious material described more fully hereinafter. The various parts of the inflatable evacuation slide assembly 10 may be joined together with a suitable adhesive whereby the structure will form a unitary composite structure capable of maintaining its shape during operation. The entire structure of the inflatable evacuation slide assembly 10 can be formed such that all of the chambers comprising the structure are interconnected pneumatically, such that a single pressurized gas source, such as compressed carbon dioxide, nitrogen, argon, a pyrotechnic gas generator or combination thereof may be utilized for its deployment.

The invention is further illustrated by the following non-limiting examples.

### Examples

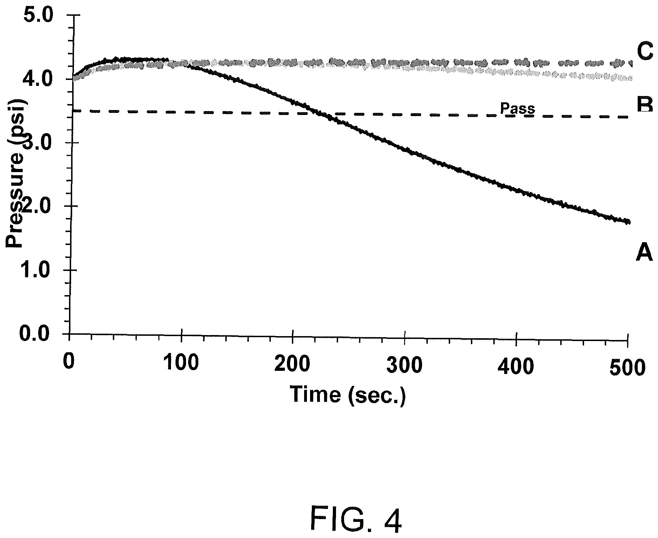

Fabrics prepared using a nanocomposite resin incorporating about 1.5 weight % of graphene nanoplatelets were evaluated for radiant heat resistance. Sample A (4.87 oz./yd² estimated areal weight) had two air-retentive layers having approximately 0.40 oz./yd² areal weight each, and Sample B (5.97 oz./yd² estimated areal weight) incorporated two air-retentive layers approximately 0.85 oz./yd² areal weight each. Additional samples were prepared using a resin mixture incorporating 22.5 weight % graphene nanoplatelets, which was applied directly onto the nylon fabric. This resin application was followed by an additional layer of a nanocomposite resin incorporating 1.5 weight % graphene nanoplatelets. Sample C (5.10 oz./yd² estimated areal weight) was selected from this group. All samples also have a radiant heat resistant coating approximately 0.50 oz./yd² estimated areal weight. The samples were subjected to radiant heat testing according to ASTM F828-83, and the results are shown in FIG. 4.

As shown in FIG. 4, the conventional sample (Sample B) maintained a pressure above the minimum passing pressure of 3.5 psi throughout the test, but required a relatively high areal weight of 5.97 oz/yd² to do so. The sample with two conventional coatings containing graphene nanoplatelets (Sample A) provide a low areal weight of 4.87 oz/yd², but fell below the minimum passing pressure after 240 seconds. However, the sample according to the invention (Sample C) maintained a pressure above the minimum passing pressure of 3.5 psi throughout the test, with a reduced areal weight of 5.10 oz/yd².

As used herein, the singular forms "a," "an," and "the" include plural referents unless the context clearly dictates otherwise, and "or" means "and/or". The modifier "about" used in connection with a quantity is inclusive of the stated value and has the meaning dictated by the context (e.g., includes the degree of error associated with measurement of the particular quantity). The terms "front", "back", "bottom", and/or "top" are used herein, unless otherwise noted, merely for convenience of description, and are not limited to any one position or spatial orientation. The endpoints of all ranges directed to the same component or property are inclusive and independently combinable (e.g., ranges of "less than or equal to 25 wt%, or 5 wt% to 20 wt%," is inclusive of the endpoints and all intermediate values of the ranges of "5 wt% to 25 wt%," etc.). The suffix "(s)" is intended to include both the singular and the plural of the term that it modifies, thereby including at least one of that term (e.g., "the colorant(s)" includes a single colorant or two or more colorants, i.e., at least one colorant). "Optional" or "optionally" means that the subsequently described event or circumstance can or can not occur, and that the description includes instances where the event occurs and instances where it does not. Unless defined otherwise, technical and scientific terms used herein have the same meaning as is commonly understood by one of skill in the art to which this invention belongs.

## Claims

1. An air-impermeable fabric with a degree of permeability sufficiently low to meet the functional requirements needed for an inflatable application, comprising
a fabric substrate;
a barrier layer comprising a first resin binder and graphene nanoplatelets, said barrier coating comprising at least 20 wt.% of the graphene nanoplatelets, based on the total weight of the barrier layer; and
a barrier overlayer disposed on one side of the barrier layer, comprising a second resin binder.

2. The air-impermeable fabric of claim 1, further comprising a barrier underlayer disposed between the barrier layer and the fabric, comprising a third resin binder

3. The air-impermeable fabric of claim 2, wherein the barrier underlayer comprises from 0.5 wt.% to 5 wt.% of graphene nanoplatelets, based on the total weight of the barrier underlayer.

4. The air-impermeable fabric of any of claims 1-3, wherein the barrier overlayer comprises from 0.5 wt.% to 5 wt.% of graphene nanoplatelets, based on the total weight of the barrier overlayer.

5. The air-impermeable fabric of any of claims 1-4, wherein the barrier layer comprises from 20 wt.% to 90 wt.% of the graphene nanoplatelets, based on the total weight of the barrier layer, preferably wherein the barrier layer comprises from 20 wt.% to 60 wt.% of the graphene nanoplatelets, based on the total weight of the barrier layer.

6. The air-impermeable fabric of claim 5, wherein the barrier layer comprises from 25 wt.% to 45 wt.% of the graphene nanoplatelets, based on the total weight of the barrier layer, preferably wherein the barrier layer comprises from 25 wt.% to 35 wt.% of the graphene nanoplatelets, based on the total weight of the barrier layer.

7. The air-impermeable fabric of any preceding claim, wherein the barrier layer comprises 30 wt.% of the graphene nanoplatelets.

8. The air-impermeable fabric of any preceding claim, wherein the barrier layer further comprises a phosphorus-based flame retardant.

9. The air-impermeable fabric of any preceding claim, wherein the barrier layer has a thickness of from 0.01 µm to 5 µm.

10. The air-impermeable fabric of claim 9, wherein the barrier layer has a thickness of from 0.1 µm to 2 µm.

11. The air-impermeable fabric of any of claims 2-10, wherein each of the barrier underlayer and the barrier overlayer independently has a thickness of 0.5 µm to 20 µm.

12. The air-impermeable fabric of any preceding claim, further comprising a heat-resistant layer disposed on the opposite side of the fabric substrate from the barrier layer, preferably wherein the heat-resistant layer comprises ceramic microspheres and/or aluminum in a resin binder.

13. The air-impermeable fabric of any of any preceding claim, wherein the fabric substrate is subjected to calendaring compression prior to disposition thereon of the barrier layer, barrier underlayer, and barrier overlayer, and/or wherein the air-impermeable fabric has an areal weight of less than or equal to 170 g/m² (6 oz/yd²).

14. An inflatable structure comprising the air-impermeable fabric of any of the preceding claims.

15. The inflatable structure of claim 14 that is an aircraft evacuation slide.

## Patentansprüche

1. Luftundurchlässiger Stoff mit einem Durchlässigkeitsgrad, der ausreichend niedrig ist, um die Funktionsanforderungen zu erfüllen, die für eine aufblasbare Anwendung erforderlich sind, umfassend
ein Stoffsubstrat;
eine Barriereschicht, die ein erstes Harzbindemittel und Graphen-Nanoplättchen umfasst, wobei die Barrierebeschichtung auf Grundlage des Gesamtgewichts der Barriereschicht mindestens 20 Gew.-% Graphen-Nanoplättchen umfasst; und
eine Barriereüberschicht, die auf einer Seite der Barriereschicht angeordnet ist, ein zweites Harzbindemittel umfassend.

2. Luftundurchlässiger Stoff nach Anspruch 1, ferner umfassend eine Barriereunterschicht, die zwischen der Barriereschicht und dem Stoff angeordnet ist, ein drittes Harzbindemittel umfassend.

3. Luftundurchlässiger Stoff nach Anspruch 2, wobei die Barriereunterschicht auf Grundlage des Gesamtgewichts der Barriereunterschicht 0,5 Gew.-% bis 5 Gew.-% Graphen-Nanoplättchen umfasst.

4. Luftundurchlässiger Stoff nach einem der Ansprüche 1-3, wobei die Barriereüberschicht auf Grundlage des Gesamtgewichts der Barriereüberschicht 0,5 Gew.-% bis 5 Gew.-% Graphen-Nanoplättchen umfasst.

5. Luftundurchlässiger Stoff nach einem der Ansprüche 1-4, wobei die Barriereschicht auf Grundlage des Gesamtgewichts der Barriereschicht 20 Gew.-% bis 90 Gew.-% Graphen-Nanoplättchen umfasst, wobei die Barriereschicht auf Grundlage des Gesamtgewichts der Barriereschicht vorzugsweise 20 Gew.-% bis 60 Gew.-% Graphen-Nanoplättchen umfasst.

6. Luftundurchlässiger Stoff nach Anspruch 5, wobei die Barriereschicht auf Grundlage des Gesamtgewichts der Barriereschicht 25 Gew.-% bis 45 Gew.-% Graphen-Nanoplättchen umfasst, wobei die Barriereschicht auf Grundlage des Gesamtgewichts der Barriereschicht vorzugsweise 25 Gew.-% bis 35 Gew.-% Graphen-Nanoplättchen umfasst.

7. Luftundurchlässiger Stoff nach einem vorhergehenden Anspruch, wobei die Barriereschicht 30 Gew.-% Graphen-Nanoplättchen umfasst.

8. Luftundurchlässiger Stoff nach einem vorhergehenden Anspruch, wobei die Barriereschicht ferner ein Flammschutzmittel auf Phosphorbasis umfasst.

9. Luftundurchlässiger Stoff nach einem vorhergehenden Anspruch, wobei die Barriereschicht eine Dicke von 0,01 µm bis 5 µm aufweist.

10. Luftundurchlässiger Stoff nach Anspruch 9, wobei die Barriereschicht eine Dicke von 0,1 µm bis 2 µm aufweist.

11. Luftundurchlässiger Stoff nach einem der Ansprüche 2-10, wobei jede von der Barriereunterschicht und der Barriereüberschicht unabhängig eine Dicke von 0,5 µm bis 20 µm aufweist.

12. Luftundurchlässiger Stoff nach einem vorhergehenden Anspruch, ferner umfassend eine hitzebeständige Schicht, die auf der gegenüberliegenden Seite des Stoffsubstrats von der Barriereschicht angeordnet ist, wobei die hitzebeständige Schicht vorzugsweise Keramikmikrokügelchen und/oder Aluminium in einem Harzbindemittel umfasst.

13. Luftundurchlässiger Stoff nach einem vorhergehenden Anspruch, wobei das Stoffsubstrat einer Verdichtung durch Kalandrieren ausgesetzt ist, bevor die Barriereschicht, Barriereunterschicht und Barriereüberschicht darauf angeordnet werden, und/oder wobei der luftundurchlässige Stoff ein Flächengewicht von weniger als oder gleich 170 g/m² (6 oz/yd²) aufweist.

14. Aufblasbare Struktur, umfassend den luftundurchlässigen Stoff nach einem der vorhergehenden Ansprüche.

15. Aufblasbare Struktur nach Anspruch 14, bei der es sich um eine Notrutsche eines Luftfahrzeugs handelt.

## Revendications

1. Tissu imperméable à l'air doté d'un degré de perméabilité suffisamment bas pour satisfaire aux exigences fonctionnelles nécessaires pour une application gonflable, comprenant
un substrat de tissu ;
une couche barrière comprenant un premier liant à base de résine et des nano-plaquettes de graphène, ledit revêtement barrière comprenant au moins 20 % en poids des nano-plaquettes de graphène sur la base du poids total de la couche barrière ; et
une surcouche barrière disposée sur un côté de la couche barrière, comprenant un deuxième liant à base de résine.

2. Tissu imperméable à l'air selon la revendication 1, comprenant en outre une sous-couche barrière disposée entre la couche barrière et le tissu, comprenant un troisième liant à base de résine.

3. Tissu imperméable à l'air selon la revendication 2, dans lequel la sous-couche barrière comprend de 0,5 % en poids à 5 % en poids de nano-plaquettes de graphène, sur la base du poids total de la sous-couche barrière.

4. Tissu imperméable à l'air selon l'une quelconque des revendications 1 à 3, dans lequel la surcouche barrière comprend de 0,5 % en poids à 5 % en poids de nano-plaquettes de graphène, sur la base du poids total de la surcouche barrière.

5. Tissu imperméable à l'air selon l'une quelconque des revendications 1 à 4, dans lequel la couche barrière comprend de 20 % en poids à 90 % en poids des nano-plaquettes de graphène, sur la base du poids total de la couche barrière, de préférence dans lequel la couche barrière comprend de 20 % en poids à 60 % en poids des nano-plaquettes de graphène, sur la base du poids total de la couche barrière.

6. Tissu imperméable à l'air selon la revendication 5, dans lequel la couche barrière comprend de 25 % en poids à 45 % en poids des nano-plaquettes de graphène, sur la base du poids total de la couche barrière, de préférence dans lequel la couche barrière comprend de 25 % en poids à 35 % en poids des nano-plaquettes de graphène, sur la base du poids total de la couche barrière.

7. Tissu imperméable à l'air selon une quelconque revendication précédente, dans lequel la couche barrière comprend 30 % en poids des nano-plaquettes de graphène.

8. Tissu imperméable à l'air selon une quelconque revendication précédente, dans lequel la couche barrière comprend en outre un agent ignifuge à base de phosphore.

9. Tissu imperméable à l'air selon une quelconque revendication précédente, dans lequel la couche barrière présente une épaisseur de 0,01 µm à 5 µm.

10. Tissu imperméable à l'air selon la revendication 9, dans lequel la couche barrière présente une épaisseur de 0,1 µm à 2 µm.

11. Tissu imperméable à l'air selon l'une quelconque des revendications 2 à 10, dans lequel chacune de la sous-couche barrière et de la surcouche barrière présente indépendamment une épaisseur de 0,5 µm à 20 µm.

12. Tissu imperméable à l'air selon l'une quelconque des revendications précédentes, comprenant en outre une couche résistante à la chaleur disposée sur le côté opposé du substrat de tissu par rapport à la couche barrière, de préférence dans lequel la couche résistante à la chaleur comprend des microbilles de céramique et/ou de l'aluminium dans un liant à base de résine.

13. Tissu imperméable à l'air selon une quelconque revendication précédente, dans lequel le substrat de tissu est soumis à une pression de calandrage avant la disposition sur celui-ci de la couche barrière, de la sous-couche barrière et de la surcouche barrière, et/ou dans lequel le tissu imperméable à l'air a un poids surfacique inférieur ou égal à 170 g/m² (6 oz/yd²).

14. Structure gonflable comprenant le tissu imperméable à l'air selon l'une quelconque des revendications précédentes.

15. Structure gonflable selon la revendication 14 qui est un toboggan d'évacuation d'avion.
